# EUROPEAN PATENT SPECIFICATION

(11) **EP 3 305 641 B1**
(45) Date of publication and mention of the grant of the patent: **15.07.2020**
(21) Application number: 17194779.9
(22) Date of filing: 04.10.2017
(51) Int. Cl.: B62K 11/04

(54) **STRADDLED VEHICLE**
GRÄTSCHSITZFAHRZEUG
VÉHICULE À ENFOURCHER

(30) Priority: 04.10.2016 JP 2016196793
(43) Date of publication of application: 11.04.2018
(73) Proprietor: Yamaha Hatsudoki Kabushiki Kaisha, Iwata-shi Shizuoka 438-8501 (JP)
(72) Inventor: ITO, Masato, Iwata-shi, Shizuoka 438-8501 (JP)
(74) Representative: Grünecker Patent- und Rechtsanwälte PartG mbB

(56) References cited:
- EP-A1- 1 933 011
- EP-A1- 2 343 234
- US-A1- 2014 209 060

## Description

The present invention relates to a straddled vehicle. In particular, the teaching relates to the construction of the vehicle-body frame in a straddled vehicle.

US 2014/209060 A1 discloses a motorcycle with a half-duplex cradle frame design, where the motorcycle engine is held in a double cradle with a single down tube. Additionally, document EP2343234 discloses another known straddled vehicle comprising: a vehicle-body frame; an engine attached to the vehicle-body frame; and an exhaust pipe connected to the engine, wherein the vehicle-body frame is a diamond frame and includes: a head pipe; and a down frame portion connected to the head pipe,the down frame portion including: an upper down frame portion connected to the head pipe and extending rearwardly and downwardly from the head pipe, at least a part of the upper down frame portion overlapping the engine as viewed from a front of the vehicle, the upper down frame portion being located forward of the engine as viewed from a side of the vehicle; and a lower down frame portion extending from the upper down frame portion, wherein the lower down frame portion includes: a lower left down frame portion located to the left of a central axis of the upper down frame portion as determined along a left-right direction of the vehicle, at least a part of the lower left down frame portion overlapping the engine as viewed from the front of the vehicle, at least a part of the lower left down frame portion being located forward of the engine as viewed from the side of the vehicle, the lower left down frame portion extending from the upper down frame portion rearwardly and downwardly, a bottom end of the lower left down frame portion being attached to the engine; and a lower right down frame portion located to the right of the central axis of the upper down frame portion as determined along the left-right direction of the vehicle, at least a part of the lower right down frame portion overlapping the engine as viewed from the front of the vehicle, at least a part of the lower right down frame portion being located forward of the engine as viewed from the side of the vehicle, the lower right down frame portion extending from the upper down frame portion rearwardly and downwardly, a bottom end of the lower right down frame portion being attached to the engine, at least a portion of the exhaust pipe connected to the engine being located to the right of the lower left down frame portion and to the left of the lower right down frame portion. EP 1 933 011 A1 discloses a motorcycle cycle with a (full) duplex cradle frame design, where the motorcycle engine is held in full by two separate cradles.

Moreover, known vehicle-body frames for straddled vehicles such as motorcycles include diamond frames. In a straddled vehicle including a diamond frame, the down tube connected to the head pipe has a bottom end fixed to the engine. That is, the engine is used as a strength member (i.e. part of the frame). Thus, in a straddled vehicle including a diamond frame, the weight of the vehicle-body frame can be reduced. This makes it possible to reduce the weight of the entire vehicle. Further, in a straddled vehicle including a diamond frame, no vehicle-body frame portion is present below the engine. This makes it possible to ensure a sufficiently large clearance between the bottom of the engine and the road surface. Alternatively, the engine can be mounted at a position lower than that of the engine in a straddled vehicle including a cradle frame while providing substantially the same clearance as that between the bottom of a cradle frame in a straddled vehicle and the road surface. Thus, diamond frames have many advantages.

A straddled vehicle including a diamond frame is disclosed in closest prior art JP 2015-174600 A. In the straddled vehicle of this publication, an engine hanger bracket is provided on the bottom end of a down tube which is located forward of the engine. The engine hanger bracket is fixed to the most forward point of the crankcase.

In the straddled vehicle of the above publication, the exhaust pipe is disposed to detour the down tube located forward of the engine. That is, the position of the exhaust port on the engine to which the exhaust pipe is attached must be decided on depending on the position of the down tube.

It is the object of the present invention is to provide a straddled vehicle with freedom in designing engines for the straddled vehicles where the bottom end of the down tube is fixed to the engine.

According to the present invention said object is solved by a straddled vehicle having the features of independent claim 1. Preferred embodiments are laid down in the dependent claims.

In order to improve the freedom in designing engines for straddled vehicles where the bottom end of the down tube, or down frame portion, is fixed to the engine, the relationship between the exhaust pipe attached to the engine and the down frame portion may be taken into consideration. Moreover, the exhaust pipe would be suitably disposed so as not to overlap the down frame portion as viewed from the front of the vehicle.

Hence, a straddled vehicle according to a preferred embodiment includes a vehicle-body frame, an engine, and an exhaust pipe. The engine is attached to the vehicle-body frame. The exhaust pipe is connected to the engine. The vehicle-body frame includes a head pipe and a down frame portion (a down tube or a down frame member). The down frame portion is connected to the head pipe. The down frame portion includes an upper down frame portion (an upper down frame member) and a lower down frame portion (a lower down frame member). The lower down frame portion extends from the upper down frame portion. The lower down frame portion includes a lower left down frame portion (a lower left down frame member) and a lower right down frame portion (a lower right down frame member). The lower left down frame portion is located to the left of a central axis of the upper down frame portion as determined along a left-right direction of the vehicle. At least a part of the lower left down frame portion overlaps the engine as viewed from the front of the vehicle. At least a part of the lower left down frame portion is located forward of the engine as viewed from the side of the vehicle. The lower left down frame portion extends from the upper down frame portion rearwardly and downwardly. A bottom end of the lower left down frame portion is attached to the engine. The lower right down frame portion is located to the right of the central axis of the upper down frame portion as determined along the left-right direction of the vehicle. At least a part of the lower right down frame portion overlaps the engine as viewed from the front of the vehicle. At least a part of the lower right down frame portion is located forward of the engine as viewed from the side of the vehicle. The lower right down frame portion extends from the upper down frame portion rearwardly and downwardly. A bottom end of the lower right down frame portion is attached to the engine. At least a portion of the exhaust pipe connected to the engine is located to the right of the lower left down frame portion and to the left of the lower right down frame portion.

In the above-described straddled vehicle, the lower left down frame portion is located to the left of the portion of the exhaust pipe connected to the engine, while the lower right down frame portion is located to the right of the portion of the exhaust pipe connected to the engine. The lower left down frame portion is located to the left of the central axis of the upper down frame portion, while the lower right down frame portion is located to the right of the central axis of the upper down frame portion with respect to the left-right direction of the vehicle. Thus, the portion of the exhaust pipe connected to the engine can be positioned between the lower left down frame portion and lower right down frame portion without changing, for example, the position at which the exhaust pipe is connected to the engine or the direction in which the exhaust pipe is connected to the engine. That is, it is not necessary to change, for example, the position at which the exhaust pipe is connected to the engine or the direction in which the exhaust pipe is connected to the engine depending on the shape of the vehicle-body frame (or more specifically, shape of the down frame portion). This will improve the freedom in designing the engine.
In the above-described straddled vehicle, the bottom ends of the lower left down frame portion and lower right down frame portion are fixed to the engine. This makes it easier to provide the stiffness of the vehicle-body frame required to improve the turning performance of the vehicle.
The bottom end of the lower left down frame portion includes the lowermost point of the lower left down frame portion. That is, the bottom end of the lower left down frame portion includes the distal end of the lower left down frame portion extending from the upper down frame portion.
The bottom end of the lower right down frame portion includes the lowermost point of the lower right down frame portion. That is, the bottom end of the lower right down frame portion includes the distal end of the lower right down frame portion extending from the upper down frame portion.
The lower down frame portion includes a lower left connecting portion. The lower left connecting portion is provided on the bottom end of the lower left down frame portion and is connected to a crankcase of the engine, At least a part of the lower left connecting portion is located forward of the crankcase as viewed from the side of the vehicle and is located higher than the lowermost point of the crankcase.
The lower down frame portion may include an upper left connecting portion.
The upper left connecting portion is connected to the crankcase. The upper left connecting portion is located higher than the lower left connecting portion. At least a part of the upper left connecting portion is located forward of the crankcase as viewed from the side of the vehicle.
The lower down frame portion includes a lower right connecting portion. The lower right connecting portion Is provided on the bottom end of the lower right down frame portion and is connected to the crankcase of the engine. At least a part of the lower right connecting portion is located forward of the crankcase as viewed from the side of the vehicle and is located higher than the lowermost point of the crankcase.
The lower down frame portion may include an upper right connecting portion. The upper right connecting portion is connected to the crankcase. The upper right connecting portion is located higher than the lower right connecting portion. At least a part of the upper right connecting portion is located forward of the crankcase as viewed from the side of the vehicle.
The lower left connecting portion may be integrally formed with the lower right connecting portion, or may be a separate part from the lower right connecting portion.
The upper left connecting portion may be integrally formed with the upper right connecting portion, or may be a separate part from the upper right connecting portion.

The engine is any engine in which at least the portion of the exhaust pipe that is connected to the engine is located to the right of the lower left down frame portion and to the left of the lower right down frame portion. The engine may be, for example, a single-cylinder engine, a V-twin engine or an in-line triple engine. If the engine is a V-twin engine, the exhaust pipe of which at least the portion connected to the engine is located to the right of the lower left down frame portion and to the left of the lower right down frame portion is the exhaust pipe connected to that one of the two cylinders arranged in the front-rear direction of the vehicle which is located to the front with respect to the vehicle. If the engine is an in-line triple engine, the exhaust pipe of which at least the portion connected to the engine is located to the right of the lower left down frame portion and to the left of the lower right down frame portion is the exhaust pipe connected to the middle one of the three cylinders arranged in the left-right direction of the vehicle. The engine may be a four-stroke engine or a two-stroke engine.

The engine includes a cylinder head. The exhaust pipe is connected to the cylinder head. The ends of the lower left down frame portion and the lower right down frame portion that are connected to the upper down frame portion may be located lower than the uppermost point of the cylinder head, for example.

The engine includes a cylinder head. The exhaust pipe is connected to the cylinder head. The bottom end of the upper down frame portion may overlap the cylinder head as viewed from the front of the vehicle, for example. In such implementations, travel winds are likely to hit the cylinder head. Thus, travel winds may be used to facilitate cooling of the engine.

The lower left down frame portion is not limited to a particular shape as long as it is located to the left of the central axis of the upper down frame portion as determined along the left-right direction of the vehicle. The lower right down frame portion is not limited to a particular shape as long as it is located to the right of the central axis of the upper down frame portion as determined along the left-right direction of the vehicle. The shape of the lower left down frame portion may be the same as that of the lower right down frame portion, or may be different from that of the lower right down frame portion. The lower left down frame portion and the lower right down frame portion may be mirror images of each other as viewed from the front of the vehicle, or may not be mirror images of each other. Each of the lower left down frame portion and lower right down frame portion may be shaped as a pipe or may not be shaped as a pipe.

The manner in which the lower left down frame portion extends from the upper down frame portion rearwardly and downwardly is not limited to a particular manner as long as at least a part of the bottom end of the lower left down frame portion is located rearward of and lower than the top end of the lower left down frame portion. The lower left down frame portion may include a portion inclined relative to the top-bottom direction of the vehicle as viewed from the side of the vehicle. The angle of inclination of the portion of the lower left down frame portion that is inclined relative to the top-bottom direction of the vehicle as viewed from the side of the vehicle may be constant or not constant.

The manner in which the lower left down frame portion extends from the upper down frame portion includes not only the lower left down frame portion being directly connected to the upper down frame portion and extending from the upper down frame portion, but also the lower left down frame portion being indirectly connected to the upper down frame portion and extending from the upper down frame portion. Implementations where the lower left down frame portion is directly connected to the upper down frame portion include implementations where the lower left down frame portion is welded to the upper down frame portion, for example. Implementations where the lower left down frame portion is indirectly connected to the upper down frame portion includes implementations where the lower left down frame portion is connected to the upper down frame portion with a bracket, for example, provided therebetween. The lower left down frame portion may be connected to the bracket by welding or bolting, for example.

The manner in which the lower right down frame portion extends from the upper down frame portion rearwardly and downwardly is not limited to a particular manner as long as at least a part of the bottom end of the lower right down frame portion is located rearward of and lower than the top end of the lower right down frame portion. The lower right down frame portion may include a portion inclined relative to the top-bottom direction of the vehicle as viewed from the side of the vehicle. The angle of inclination of the portion of the lower right down frame portion that is inclined relative to the top-bottom direction of the vehicle as viewed from the side of the vehicle may be constant or not constant,

The manner in which the lower right down frame portion extends from the upper down frame portion includes not only the lower right down frame portion being directly connected to the upper down frame portion and extending from the upper down frame portion, but also the lower right down frame portion being indirectly connected to the upper down frame portion and extending from the upper down frame portion. Implementations where the lower right down frame portion is directly connected to the upper down frame portion include implementations where the lower right down frame portion is welded to the upper down frame portion, for example. Implementations where the lower right down frame portion is indirectly connected to the upper down frame portion includes implementations where the lower right down frame portion is connected to the upper down frame portion with a bracket, for example, provided therebetween. The lower right down frame portion may be connected to the bracket by welding or bolting, for example.

If each of the lower left down frame portion and lower right down frame portion is attached to the upper down frame portion with a bracket provided therebetween, the brackets may be connected to the upper down frame portion by bolting or welding, for example. If the brackets are connected to the upper down frame portion by bolting, the lower left down frame portion and lower right down frame portion are detachable from the upper down frame portion. If the brackets are connected to the upper down frame portion by bolting, the stiffness of the vehicle-body frame may be adjusted by adjusting the tightening strength of the bolts.

The ends of the lower left down frame portion and the lower right down frame portion that are connected to the upper down frame portion may be located higher than the portion of the exhaust pipe connected to the engine, for example.

The ends of the lower left down frame portion and lower right down frame portion that are connected to the upper down frame portion may be located lower than the uppermost point of the cylinder head, for example.

The manner in which at least the portion of the exhaust pipe connected to the engine is located to the right of the lower left down frame portion and located to the left of the lower right down frame portion includes at least the portion of the exhaust pipe connected to the engine being located between the lower left down frame portion and lower right down frame portion as viewed from the front of the vehicle. At least the portion of the exhaust pipe connected to the engine being located between the lower left down frame portion and lower right down frame portion as viewed from the front of the vehicle means that at least the portion of the exhaust pipe connected to the engine does not overlap any of the lower left down frame portion and lower right down frame portion as viewed from the front of the vehicle.

As viewed from the side of the vehicle, the exhaust pipe may cross the lower left down frame portion or may not cross the lower left down frame portion.

As viewed from the side of the vehicle, the exhaust pipe may cross the lower right down frame portion or may not cross the lower right down frame portion.

The portion of the exhaust pipe connected to the engine may overlap the central axis of the upper down frame portion as viewed from the front of the vehicle, for example.

### BRIEF DESCRIPTION OF THE DRAWINGS

[FIG. 1] FIG. 1 is a left side view of a motorcycle according to a preferred embodiment.
[FIG. 2] FIG. 2 is a left side view of the vehicle-body frame of the motorcycle shown in FIG. 1, where the engine is attached to the vehicle-body frame.
[FIG. 3] FIG. 3 is a front view of the vehicle-body frame of the motorcycle shown in FIG. 1, where the engine is attached to the vehicle-body frame.
[FIG. 4] FIG. 4 is a plan view of the engine supported by the vehicle-body frame of the motorcycle shown in FIG. 1.
[FIG. 5] FIG. 5 is a left side view of the lower down frame portion of the motorcycle shown in FIG. 1.
[FIG. 6] FIG. 6 is a front view of the lower down frame portion of the motorcycle shown in FIG. 1.
[FIG. 7] FIG. 7 is a perspective view of the lower down frame portion of the motorcycle shown in FIG. 1.
[FIG. 8] FIG. 8 is an enlarged left side view of a portion of FIG. 2.
[FIG. 9] FIG. 9 is a perspective view of the lower left down frame portion and lower right down frame portion attached to the bottom front portion of the crankcase.
[FIG. 10] FIG. 10 is a left side view of a stay to be attached to the lower ends of the lower left down frame portion and lower right down frame portion.
[FIG. 11] FIG. 11 is a plan view of the stay to be attached to the lower ends of the lower left down frame portion and lower right down frame portion.

### DETAILED DESCRIPTION OF THE PREFERRED EMBODIMENTS

A straddled vehicle according to a preferred embodiment will now be described with reference to the drawings. The present embodiment will be described where a motorcycle will be discussed as an example of the straddled vehicle. The same or corresponding parts in the drawings are labeled with the same characters and their description will not be repeated.

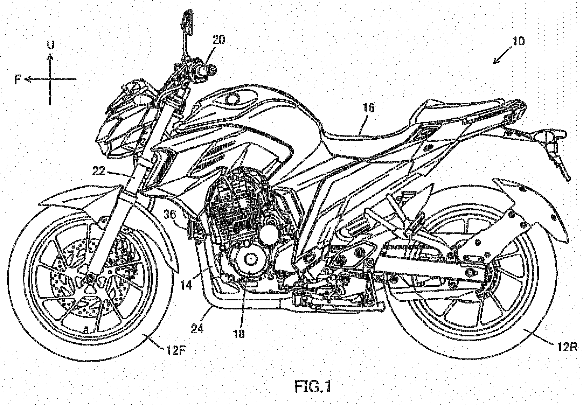

FIG. 1 is a left side view of a motorcycle 10. In the following description, "front/forward", "rear(ward)", "left" and "right" mean directions as perceived by a rider sitting on the seat 16 of the motorcycle 10. In FIG. 1, arrow "F" indicates the forward direction with respect to the motorcycle 10, and arrow "U" indicates the upward direction with respect to the motorcycle 10.

As shown in FIG. 1, the motorcycle 10 includes a front wheel 12F, a rear wheel 12R, a vehicle-body frame 14, a seat 16, an engine 18, handlebars 20, a front fork 22, and an exhaust pipe 24.

The front fork 22 rotatably supports the front wheel 12F. The handlebars 20 may be operated to change the direction of advance of the front wheel 12F.

The engine 18 is attached to the vehicle-body frame 14. The exhaust pipe 24 is connected to the engine 18.

The rear wheel 12R is located rearward of the engine 18. Driving power of the engine 18 may be transmitted to the rear wheel 12R to rotate the rear wheel 12R.

The seat 16 is supported by the vehicle-body frame 14. The seat 16 is located higher than and rearward of the engine 18.

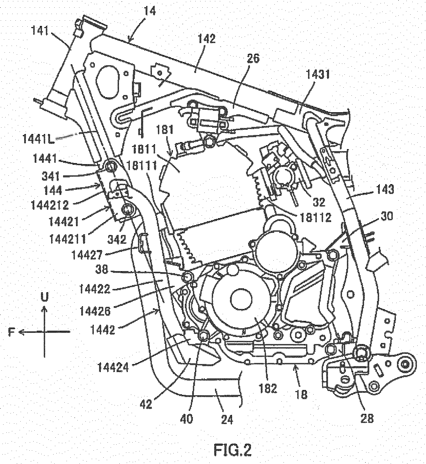

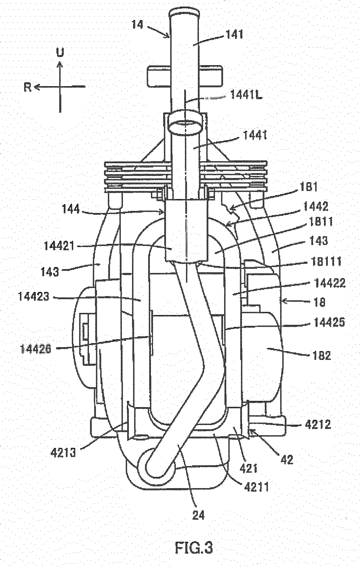

The motorcycle 10 will be described in more detail with reference to FIGS. 2 and 3. FIG. 2 is a left side view of the vehicle-body frame 14 to which the engine 18 is attached. FIG. 3 is a front view of the vehicle-body frame 14 to which the engine 18 is attached.

As shown in FIG. 2, the vehicle-body frame 14 is a so-called diamond frame. The vehicle-body frame 14 includes a head pipe 141, a main frame portion 142, a pair of side frame portions 143 located to the left and right, and a down frame portion 144. These components will be described below.

As shown in FIG. 2, the head pipe 141 is located at the most forward point of the vehicle-body frame 14. The head pipe 141 extends in the top-bottom direction. The uppermost point of the head pipe 141 is located rearward of the lowermost point of the head pipe 141. The head pipe 141 is located forward of the engine 18.

As shown in FIG. 2, the main frame portion 142 is connected to the head pipe 141. The main frame portion 142 extends from the head pipe 141 rearwardly and downwardly. The main frame portion 142 is located higher than the engine 18.

As shown in FIG. 2, the left and right side frame portions 143 are connected to the main frame portion 142 with a bracket 1431 provided therebetween. The left and right side frame portions 143 are separated from each other as determined along the left-right direction of the vehicle. The left and right side frame portions 143 are located rearward of the engine 18. The left and right side frame portions 143 extend rearwardly and downwardly from the main frame portion 142 with the brackets 1431 provided therebetween.

The left and right side frame portions 143 are positioned to be mirror images of each other. In view of this, FIG. 2 only shows the side frame portion 143 located to the left. The side frame portion 143 located to the right is hidden by the side frame portion 143 located to the left.

As shown in FIG. 2, the down frame portion 144 is located lower than the main frame portion 142. The down frame portion 144 is connected to the head pipe 141. The down frame portion 144 extends from the head pipe 141 rearwardly and downwardly. As viewed from the side of the vehicle, at least a part of the down frame portion 144 is located forward of the engine 18.

As shown in FIG. 2, the bottom end of the down frame portion 144 is fixed to the engine 18. The bottom end of the down frame portion 144 is not connected to other components of the vehicle-body frame 14.

As shown in FIG. 2, the down frame portion 144 is located forward of the left and right side frame portions 143 as viewed from the side of the vehicle. As viewed from the side of the vehicle, the engine 18 is located between the down frame portion 144 and the side frame portions 143.

As shown in FIG. 2, the engine 18 is attached to the vehicle-body frame 14. The engine 18 may be a four-cycle engine, for example. The engine 18 is a single-cylinder engine.

As shown in FIG. 2, the engine 18 includes a cylinder 181 and a crankcase 182. These components will be described below.

As shown in FIG. 2, the cylinder 181 includes a cylinder head 1811. The cylinder head 1811 is attached to the main frame portion 142 with a bracket 26 provided therebetween. The cylinder head 1811 includes an exhaust port 18111 and an inlet port 18112.

As shown in FIG. 2, the exhaust port 18111 is provided on the front side of the cylinder head 1811. The inlet port 18112 is provided on the rear side of the cylinder head 1811. That is, the exhaust port 18111 is located forward of the inlet port 18112. At least a part of the exhaust portion 18111 is located lower than the inlet port 18112.

As shown in FIG. 2, the exhaust pipe 24 is connected to the exhaust port 18111. A throttle body 32 is connected to the inlet port 18112.

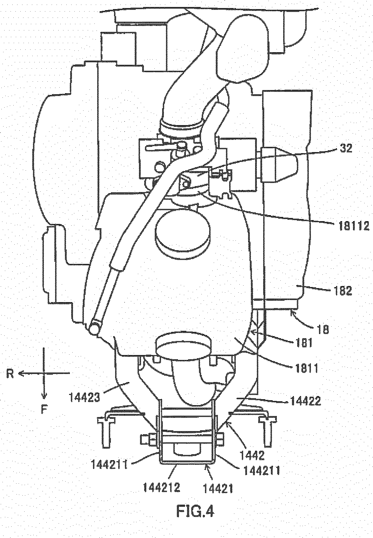

FIG. 4 is a plan view of the engine 18. Referring to FIGS. 2 and 4, the exhaust port 18111 and inlet port 18112 are arranged in the front-rear direction of the vehicle.

As shown in FIG. 2, the crankcase 182 is connected to the bottom end of the cylinder 181. That is, the crankcase 182 is located lower than the cylinder 181.

As shown in FIG. 2, a rear portion of the crankcase 182 is connected to the left and right side frame portions 143 with a bracket 28 and a bracket 30 provided therebetween. The bracket 30 is located higher than the bracket 28.

As shown in FIG. 2, a front portion of the crankcase 182 is connected to the down frame portion 144. The construction of the connection between the front portion of the crankcase 182 and down frame portion 144 will be described further below.

The down frame portion 144 will be described in more detail with reference to FIGS. 2 and 3. The down frame portion 144 includes an upper down frame portion 1441 and a lower down frame portion 1442. These components will be described below.

As shown in FIG. 2, the upper down frame portion 1441 is shaped as a pipe. The upper down frame portion 1441 is connected to the head pipe 141. The upper down frame portion 1441 extends from the head pipe 141 rearwardly and downwardly. The upper down frame portion 1441 is located forward of the engine 18.

As shown in FIGS. 2 and 3, the lower down frame portion 1442 is connected to the bottom end of the upper down frame portion 1441. The lower down frame portion 1442 extends from the lower end of the upper down frame portion 1441.

As shown in FIG. 2, the top end of the lower down frame portion 1442, which is connected to the upper down frame portion 1441, is located forward of the engine 18. That is, at least a part of the lower down frame portion 1442 is located forward of the engine 18.

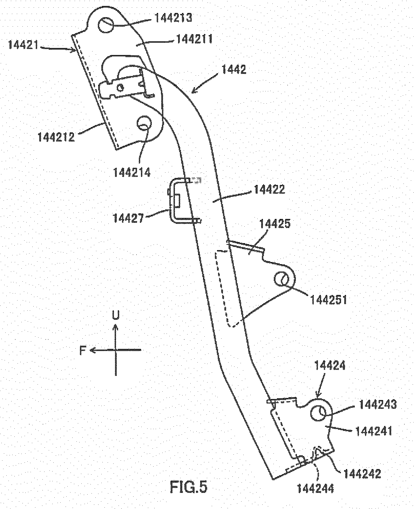

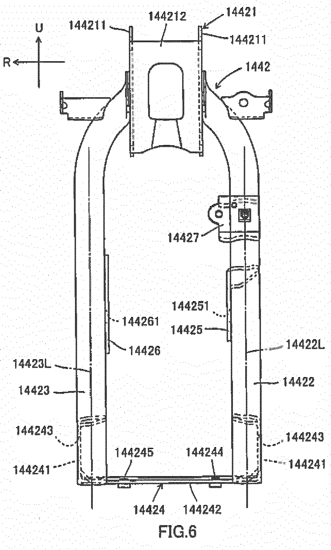

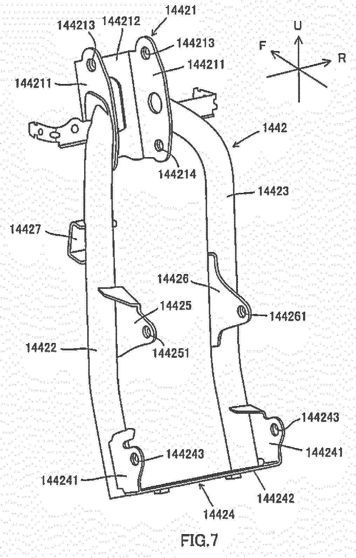

The lower down frame portion 1442 will be described with reference to FIGS. 5, 6 and 7. FIG. 5 is a left side view of the lower down frame portion 1442. FIG. 6 is a front view of the lower down frame portion 1442. FIG. 7 is a perspective view of the lower down frame portion 1442.

As shown in FIGS. 5, 6 and 7, the lower down frame portion 1442 includes a bracket 14421, a lower left down frame portion 14422, a lower right down frame portion 14423, a lower bracket 14424 that serves as the lower left connecting portion and lower right connecting portion, an upper left bracket 14425 that serves as the upper left connecting portion, and an upper right bracket 14426 that serves as the upper right connecting portion. These components will be described below. In FIG. 5, the upper right bracket 14426 is not shown.

As shown in FIGS. 6 and 7, the bracket 14421 includes a pair of side plates 144211 located to the left and right, and a connecting plate 144212. These components will be described below.

As shown in FIGS. 6 and 7, the left and right side plates 144211 are separated from each other as determined along the left-right direction of the vehicle. Each of the left and right side plates 14211 has the same shape and size.

As shown in FIGS. 6 and 7, the connecting plate 144212 is located between the left and right side plates 144211. The connecting plate 144212 connects the front edges of the left and right side plates 144211.

As shown in FIGS. 5, 6 and 7, the lower left down frame portion 14422 as a whole is shaped as a pipe that extends in the top-bottom direction. The top end of the lower left down frame portion 14422 is welded to the outer side (i.e. side located outward as determined along the left-right direction of the vehicle) of the side plate 144211 located to the left. The lower left down frame portion 14422 extends rearwardly and downwardly from the side plate 144211 located to the left. Thus, the lowermost point of the lower left down frame portion 14422 is located rearward of and lower than the uppermost point of the lower left down frame portion 14422.

As shown in FIGS. 5, 6 and 7, the lower right down frame portion 14423 as a whole is shaped as a pipe that extends in the top-bottom direction. The top end of the lower right down frame portion 14423 is welded to the outer side (i.e. side located outward as determined along the left-right direction of the vehicle) of the side plate 144211 located to the right. The lower right down frame portion 14423 extends rearwardly and downwardly from the side plate 144211 located to the right. Thus, the lowermost point of the lower right down frame portion 14423 is located rearward of and lower than the uppermost point of the lower right down frame portion 14422.

As shown in FIGS. 6 and 7, the lower bracket 14424 is welded to the bottom ends of the lower left down frame portion 14422 and lower right down frame portion 14423. That is, the lower bracket 14424 couples the lower left down frame portion 14422 and lower right down frame portion 14423.

As shown in FIGS. 6 and 7, the lower bracket 14424 includes a pair of side plates 144241 to the left and right, and a connecting plate 144242. These components will be described below.

As shown in FIGS. 6 and 7, the left and right side plates 144241 are separated from each other as determined along the left-right direction of the vehicle. Each of the left and right side plates 144241 has the same shape and size.

As shown in FIG. 6, the side plate 144241 located to the left is located to the left of the central line 14422L passing through the center of the lower end of the lower left down frame portion 14422 as viewed from the front of the vehicle. A top portion of the side plate 144241 located to the left is bent toward the right.

As shown in FIG. 6, the side plate 144241 located to the right is located to the right of the central line 14422L passing through the center of the lower end of the lower right down frame portion 14423 as viewed from the front of the vehicle. A top portion of the side plate 144241 located to the right is bent toward the left.

As shown in FIGS. 6 and 7, the connecting plate 144242 is located between the left and right side plates 144241. The connecting plate 144242 connects the lower edges of the left and right side plates 144241.

As shown in FIGS. 5, 6 and 7, the upper left bracket 14425 is located higher than the lower bracket 14424. The upper left bracket 14425 is located lower than the uppermost point of the lower left down frame portion 14422. The upper left bracket 14425 is welded to the lower left down frame portion 14422.

As shown in FIG. 6, at least a portion of the upper left bracket 14425 is located to the right of the central line 14422L as viewed from the front of the vehicle. A top portion of the upper left bracket 14425 is bent toward the left.

As shown in FIGS. 5, 6 and 7, a bracket 14427 is welded to the lower left down frame portion 14422. The bracket 14427 is located higher than the upper left bracket 14425. The bracket 14427 is located lower than the uppermost point of the lower left down frame portion 14422. A horn 36 (see FIG. 1) is attached to the bracket 14427.

As shown in FIGS. 5, 6 and 7, the upper right bracket 14426 is located higher than the lower bracket 14424. The upper right bracket 14426 is located lower than the uppermost point of the lower right down frame portion 14423. The upper right bracket 14426 is welded to the lower right down frame portion 14423. As shown in FIG. 6, the upper right bracket 14426 is located to the left of the central line 14423L as viewed from the front of the vehicle.

The lower down frame portion 1442 will be described in more detail with reference to FIGS. 2, 3 and 4. The lower down frame portion 1442 is fixed to the upper down frame portion 1441 by two bolts 341 and 342.

As shown in FIG. 3, when the lower down frame portion 1442 has been bolted to the upper down frame portion 1441, the upper down frame portion 1441 is located between the left and right side plates 144211 of the bracket 14421 on the lower down frame portion 1442. That is, the central axis 1441L of the upper down frame portion 1441 is located between the left and right side plates 144211.

As shown in FIG. 2, when the lower down frame portion 1442 has been bolted to the upper down frame portion 1441, the connecting plate 144212 of the bracket 14421 is located forward of the upper down frame portion 1441. That is, the central axis 1441L of the upper down frame portion 1441 is located rearward of the connecting plate 144212.

The bolt 341 is inserted through bolt insertion holes 144213 (see FIGS. 5 and 7) formed in the left and right side plates 144211. In this state, the bolt 341 extends through the upper down frame portion 1441 in the left-right direction of the vehicle. A nut is attached to the tip of the bolt 341.

As shown in FIGS. 5 and 7, the bolt insertion hole 144213 in the side plate 144211 located to the left is located higher than the uppermost point of the lower left down frame portion 14422. The bolt insertion hole 144213 in the side plate 144211 located to the right is located higher than the uppermost point of the lower right down frame portion 14423.

The bolt 342 is inserted through the bolt insertion holes 144214 (see FIGS. 5 and 7) formed in the left and right side plates 144211. In this state, the bolt 342 extends through the upper down frame portion 1441 in the left-right direction of the vehicle. A nut is attached to the tip of the bolt 342.

As shown in FIGS. 5 and 7, the bolt insertion hole 144214 in the side plate 144211 located to the left is located lower than the uppermost point of the lower left down frame portion 14422. The bolt insertion hole 144214 in the side plate 144211 located to the right is located lower than the uppermost point of the lower right down frame portion 14423.

As shown in FIG. 3, when the lower down frame portion 1442 has been attached to the upper down frame portion 1441, the lower left down frame portion 14422 is located to the left of the central axis 1441L of the upper down frame portion 1441. As viewed from the front of the vehicle, at least a part of the lower left down frame portion 14422 overlaps the engine 18.

As shown in FIG. 2, when the lower down frame portion 1442 has been attached to the upper down frame portion 1441, at least a part of the lower left down frame portion 14422 is located forward of the engine 18 as viewed from the side of the vehicle.

As shown in FIG. 3, when the lower down frame portion 1442 has been attached to the upper down frame portion 1441, the lower right down frame portion 14423 is located to the right of the central axis 1441L of the upper down frame portion 1441. As viewed from the front of the vehicle, at least a part of the lower right down frame portion 14423 overlaps the engine 18.

As shown in FIG. 2, when the lower down frame portion 1442 has been attached to the upper down frame portion 1441, at least a part of the lower right down frame portion 14423 is located forward of the engine 18 as viewed from the side of the vehicle.

As shown in FIG. 2, the lower left down frame portion 14422 and lower right down frame portion 14423 are attached to a top front portion of the crankcase 182 by a bolt 38.

As shown in FIG. 2, when the lower left down frame portion 14422 and lower right down frame portion 14423 have been bolted to the top front portion of the crankcase 182, the top front portion of the crankcase 182 is located between the upper left bracket 14425 and upper right bracket 14426.

The bolt 38 is inserted through a bolt insertion hole 144251 (see FIG. 7) formed in the upper left bracket 14425 and a bolt insertion hole 144261 (see FIG. 7) formed in the upper right bracket 14426. In this state, the bolt 38 extends through the top front portion of the crankcase 182 in the left-right direction of the vehicle. A nut is attached to the tip of the bolt 38.

At this moment, at least a part of each of the upper left bracket 14425 and upper right bracket 14426 is located forward of the crankcase 182 as viewed from the side of the vehicle, as shown in FIG. 2.

As shown in FIG. 2, the lower ends of the lower left down frame portion 14422 and lower right down frame portion 14423 are attached to a bottom front portion of the crankcase 182 by a bolt 40.

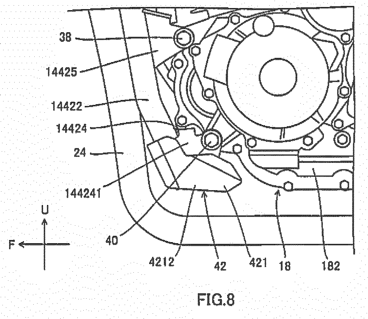

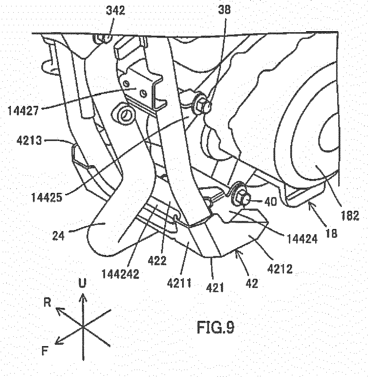

The construction for attaching the lower ends of the lower left down frame portion 14422 and lower right down frame portion 14423 to a front portion of the crankcase 182 will be described with reference to FIGS. 8 and 9. FIG. 8 is an enlarged left side view of a portion of FIG. 2. FIG. 9 is a perspective view of the lower ends of the lower left down frame portion 14422 and lower right down frame portion 14423 attached to the bottom front portion of the crankcase 182.

As shown in FIGS. 8 and 9, when the lower ends of the lower left down frame portion 14422 and lower right down frame portion 14423 have been bolted to the bottom front portion of the crankcase 182, the bottom front portion of the crankcase 182 is located between the left and right side plates 144241 of the lower bracket 14424.

The bolt 40 is inserted through the bolt insertion holes 144243 formed in the left and right side plates 144241. In this state, the bolt 40 extends through the bottom front portion of the crankcase 182 in the left-right direction of the vehicle. A nut is attached to the tip of the bolt 40.

At this moment, at least a part of the lower bracket 14424 is located forward of the crankcase 182 as viewed from the side of the vehicle, as shown in FIG. 8. At least a part of the lower bracket 14424 is located higher than the lowermost point of the crankcase 182 as viewed from the side of the vehicle, as shown in FIG. 8.

As shown in FIGS. 8 and 9, a stay 42 is fixed to the lower end of the lower left down frame portion 14422 and the lower end of the lower right down frame portion 14423.

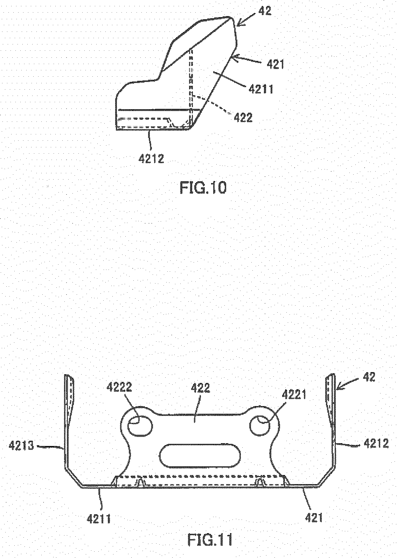

The stay 42 will be described with reference to FIGS. 10 and 11. FIG. 10 is a left side view of the stay 42. FIG. 11 is a front view of the stay 42. The front view of the stay 42 is one in the state shown in FIG. 10.

As shown in FIGS. 10 and 11, the stay 42 includes a side plate 421 and an attachment plate 422. The side plate 421 includes a front plate portion 4211, a left side plate portion 4212, and a right side plate portion 4213. The attachment plate 422 is connected to an edge of the front plate portion 4211.

As shown in FIGS. 8 and 9, the stay 42 is fixed to the bottom end of the lower left down frame portion 14422 and the bottom end of the lower right down frame portion 14423. More specifically, the attachment plate 422 is bolted to the connecting plate 144242 of the lower bracket 14424. Two bolts are used for the bolting.

One bolt is inserted through a bolt insertion hole 4221 (see FIG. 11) formed in the attachment plate 422 and a bolt insertion hole 144244 (see FIG. 6) formed in the connecting plate 144242. A nut is fixed to the tip of the bolt.

The other bolt is inserted through a bolt insertion hole 4222 (see FIG. 11) formed in the attachment plate 422 and a bolt insertion hole 144245 (see FIG. 6) formed in the connecting plate 144242. A nut is fixed to the tip of the bolt.

Thus, when the attachment plate 422 has been bolted to the connecting plate 144242 of the lower bracket 14424, the front plate portion 4211 is located forward of the bottom ends of the lower left down frame portion 14422 and lower right down frame portion 14423. At least a part of the left side plate portion 4212 is located to the left of the bottom end of the lower left down frame portion. At least a part of the right side plate portion 4213 is located to the right of the bottom end of the lower right down frame portion.

The positional relationship between the down frame portion 144 and exhaust pipe 24 will be described with reference to FIGS. 2 and 3.

As shown in FIG. 2, the exhaust pipe 24 extends from the exhaust port 18111 forwardly and downwardly. The section of the exhaust pipe 24 located forward of the engine 18 extends rearwardly and downwardly. The section of the exhaust pipe 24 located below the engine 18 extends rearwardly.

As shown in FIGS. 3 and 4, at least the portion of the exhaust pipe 24 connected to the engine 18 is located to the right of the lower left down frame portion 14422 and located to the left of the lower right down frame portion 14423. That is, at least the portion of the exhaust pipe 24 connected to the engine 18 is located between the lower left down frame portion 14422 and lower right down frame portion 14423 as viewed from the front of the vehicle. To sum up, at least the portion of the exhaust pipe 24 connected to the engine 18 overlaps neither the lower left down frame portion 14422 nor lower right down frame portion 14423 as viewed from the front of the vehicle.

Particularly, according to the present embodiment, as shown in FIG. 3, the section of the exhaust pipe 24 that is located between its end connecting to the engine 18 and its portion at the same position as the lower end of the lower down frame portion 1442 (i.e. lower ends of the lower left down frame portion 14422 and lower right down frame portion 14423) as determined along the top-bottom direction of the vehicle is located to the right of the lower left down frame portion 14422 and located to the left of the lower right down frame portion 14423. That is, this section of the exhaust pipe 24 is located between the lower left down frame portion 14422 and lower right down frame portion 14423 as viewed from the front of the vehicle. To sum up, this section of the exhaust pipe 24 overlaps neither the lower left down frame portion 14422 nor lower right down frame portion 14423 as viewed from the front of the vehicle.

As shown in FIG. 2, as viewed from the side of the vehicle, the exhaust pipe 24 crosses the lower left down frame portion 14422 and lower right down frame portion 14423. At least a part of the exhaust pipe 24 is located forward of the lower left down frame portion 14422 and lower right down frame portion 14423. At least a part of the exhaust pipe 24 is located lower than the lowermost points of the lower left down frame portion 14422 and lower right down frame portion 14423.

As shown in FIG. 2, the uppermost points of the lower left down frame portion 14422 and lower right down frame portion 14423 (i.e., ends connecting to the bracket 14421) are located higher than the portion of the exhaust pipe 24 connected to the engine 18. As shown in FIG. 3, the top ends of the lower left down frame portion 14422 and lower right down frame portion 14423 (i.e., ends connecting to the bracket 14421) overlap the cylinder head 1811 as viewed from the front of the vehicle. As shown in FIG. 2, the uppermost points of the lower left down frame portion 14422 and lower right down frame portion 14423 (i.e., ends connecting to the bracket 14421) are located lower than the uppermost point of the cylinder head 1811.

As shown in FIG. 2, at least parts of the lower left down frame portion 14422 and lower right down frame portion 14423 are located rearward of the central axis 1441L of the upper down frame portion 1441 as viewed from the side of the vehicle. As shown in FIG. 2, at least a part of the exhaust pipe 24 overlaps the central axis 1441L of the upper down frame portion 1441 as viewed from the side of the vehicle.

As shown in FIG. 2, the bottom end of the upper down frame portion 1441 is separated from the exhaust pipe 24. As shown in FIG. 2, the lowermost point of the upper down frame portion 1441 is located lower than the uppermost point of the cylinder head 1811. Referring to FIGS. 2 and 3, the bottom end of the upper down frame portion 1441 overlaps the cylinder head 1811 as viewed from the front of the vehicle. That is, at least a part of the upper down frame portion 1441 overlaps the cylinder head 1811 as viewed from the front of the vehicle.

As shown in FIG. 3, the central axis 1441L of the upper down frame portion 1441 extends in the top-bottom direction of the vehicle as viewed from the front of the vehicle. As viewed from the front of the vehicle, the central axis 1441L overlaps at least the portion of the exhaust pipe 24 connected to the cylinder 181 (more specifically, portion connected to the exhaust port 18111)

In the motorcycle 10, the lower left down frame portion 14422 is located to the left of the portion of the exhaust pipe 24 connected to the engine 18, and the lower right down frame portion 14423 is located to the right of the portion of the exhaust pipe 24 connected to the engine 18. The lower left down frame portion 14422 is located to the left of the central axis 1441L of the upper down frame portion 1441, while the lower right down frame portion 14423 is located to the right of the central axis 1441L of the upper down frame portion 1441. Thus, the portion of the exhaust pipe 24 connected to the engine 18 may be positioned between the lower left down frame portion 14422 and lower right down frame portion 14423 without changing, for example, the position at which the exhaust pipe 24 is connected to the engine 18 or the direction in which the exhaust pipe 24 is connected to the engine 18. That is, it is not necessary to change, for example, the position at which the exhaust pipe 24 is connected to the engine 18 or the direction in which the exhaust pipe 24 is connected to the engine 18 depending on the shape of the vehicle-body frame (or more specifically, shape of the down frame portion). As a result, as can be understood from FIGS. 2 and 4, it is possible to align the direction in which the exhaust port 18111 and inlet port 18112 are arranged with the direction in which the portion of the exhaust pipe 24 connected to the engine 18 extends, thereby improving the performance of the engine 18. That is, in the motorcycle 10, the freedom in designing the engine 18 is improved.

In the motorcycle 10, the bottom ends of the lower left down frame portion 14422 and lower right down frame portion 14423 are fixed to the bottom front portion of the crankcase 182. This makes it easier to provide the stiffness of the vehicle-body frame 14 necessary to improve the turning performance of the vehicle.

In the motorcycle 10, the lower down frame portion 1442 is bolted to the upper down frame portion 1441. Thus, the stiffness of the vehicle-body frame 14 may be adjusted by adjusting the tightening strength of the bolts.

In the motorcycle 10, the bottom end of the upper down frame portion 1441 overlaps the cylinder head 1811 as viewed from the front of the vehicle. As such, travel winds are likely to hit the cylinder head 1811. Thus, travel winds may be used to facilitate cooling of the engine 18.

In the motorcycle 10, the lower down frame portion 1442 is bolted to the upper down frame portion 1441. Thus, it is possible to attach the lower down frame portion 1442 to the upper down frame portion 1441 after the cylinder head 1811 of the engine 18 has been attached to the main frame portion 142 by the bracket 26 and the rear portion of the crankcase 182 of the engine 18 has been attached to the left and right side frame portions 143 by the brackets 28 and 30. This makes it easier to mount the engine 18 on the vehicle-body frame 14.

In the motorcycle 10, the lower left down frame portion 14422, to which the horn 36 is attached using the bracket 14427, is attached to the crankcase 182 with the upper left bracket 14425 therebetween, which has an upper end portion bent outward as determined along the left-right direction of the vehicle. This will prevent vibrations of the engine 18 from being transmitted to the horn 36.

In the motorcycle 10, the stay 42 is fixed to the bottom ends of the lower left down frame portion 14422 and lower right down frame portion 14423. Thus, the stay 42 will protect the lower ends of the lower left down frame portion 14422 and lower right down frame portion 14423.

Moreover, the above-illustrated embodiment was described where a motorcycle was discussed as an example of the straddled vehicle; alternatively, the straddled vehicle may be a leaning vehicle where the vehicle body can lean toward the direction to which the vehicle turns. The straddled vehicle may have one front wheel or two front wheels. The straddled vehicle may have one rear wheel or two rear wheels.

Moreover, in the above-illustrated embodiment, each of the lower left down frame portion 14422 and lower right down frame portion 14423 is attached to the upper down frame portion 1441 with a bracket 14421 provided therebetween; alternatively, the lower left down frame portion 14422 and lower right down frame portion 14423 may be directly attached to the upper down frame portion 1441.

## Claims

1. A straddled vehicle comprising:
a vehicle-body frame (14);
an engine (18) attached to the vehicle-body frame (14); and
an exhaust pipe (24) connected to the engine (18),
wherein the vehicle-body frame (14) is a diamond frame, in which no vehicle-body frame portion is present below the engine (18), and includes:
a head pipe (141); and
a down frame portion (144) connected to the head pipe (141),
wherein the down frame portion (144) includes:
an upper down frame portion (1441) which is one member connected to the head pipe (141) and extending rearwardly and downwardly from the head pipe (141), at least a part of the upper down frame portion (1441) overlapping the engine (18) as viewed from a front of the vehicle, the upper down frame portion (1441) being located forward of the engine (18) as viewed from a side of the vehicle; and
a lower down frame portion (1442) extending from the upper down frame portion (1441), wherein the lower down frame portion (1442) includes:
a lower left down frame portion (14422) which is directly or indirectly connected to a bottom end of the upper down frame portion (1441) and located to the left of a central axis (1441L) of the upper down frame portion (1441) as determined along a left-right direction of the vehicle, at least a part of the lower left down frame portion (14422) overlapping the engine (18) as viewed from the front of the vehicle, at least a part of the lower left down frame portion (14422) being located forward of the engine (18) as viewed from the side of the vehicle, the lower left down frame portion (14422) extending from the upper down frame portion (1441) rearwardly and downwardly, a bottom end of the lower left down frame portion (14422) being attached to the engine (18); and
a lower right down frame portion (14423) which is directly or indirectly connected to the bottom end of the upper down frame portion (1441) and located to the right of the central axis (1441L) of the upper down frame portion (1441) as determined along the left-right direction of the vehicle, at least a part of the lower right down frame portion (14423) overlapping the engine (18) as viewed from the front of the vehicle, at least a part of the lower right down frame portion (14423) being located forward of the engine (18) as viewed from the side of the vehicle, the lower right down frame portion (14423) extending from the upper down frame portion (1441) rearwardly and downwardly, a bottom end of the lower right down frame portion (14423) being attached to the engine (18),
wherein at least a portion of the exhaust pipe (24) connected to the engine (18) is located to the right of the lower left down frame portion (14422) and to the left of the lower right down frame portion (14423).

2. The straddled vehicle according to claim 1, wherein the portion of the exhaust pipe (24) connected to the engine (18) overlaps the central axis (1441L) of the upper down frame portion (1441) as viewed from the front of the vehicle.

3. The straddled vehicle according to claim 1 or 2, wherein ends of the lower left down frame portion (14422) and the lower right down frame portion (14423) that are connected to the upper down frame portion (1441) are located higher than the portion of the exhaust pipe (24) connected to the engine (18).

4. The straddled vehicle according to any one of claims 1 to 3, wherein the engine (18) includes a cylinder head (1811), the exhaust pipe (24) being connected to the cylinder head (1811), and
wherein a lowermost point of the upper down frame portion (1441) overlaps the cylinder head (1811) as viewed from the front of the vehicle.

5. The straddled vehicle according to claim 4, wherein ends of the lower left down frame portion (14422) and the lower right down frame portion (14423) that are connected to the upper down frame portion (1441) are located lower than an uppermost point of the cylinder head (1811).

6. The straddled vehicle according to any one of claims 1 to 5, wherein the engine (18) includes a crankcase (182), and
wherein the lower down frame portion (1442) includes:
a lower left connecting portion (14424) provided on a bottom end of the lower left down frame portion (14422) and connected to the crankcase (182); and
a lower right connecting portion (14424) provided on a bottom end of the lower right down frame portion (14423) and connected to the crankcase (182).

7. The straddled vehicle according to claim 6, wherein at least a part of each of the lower left connecting portion (14424) and the lower right connecting portion (14424) is located forward of the crankcase (182) as viewed from the side of the vehicle and is located higher than a lowermost point of the crankcase (182).

8. The straddled vehicle according to claim 6 or 7, wherein the lower down frame portion (1442) further includes:
an upper left connecting portion (14425) provided on the lower left down frame portion (14422) and located higher than the lower left connecting portion (14424), at least a part of the upper left connecting portion (14425) being located forward of the crankcase (182) as viewed from the side of the vehicle, the upper left connecting portion (14425) being connected to the crankcase (182); and
an upper right connecting portion (14426) provided on the lower right down frame portion (14423) and located higher than the lower right connecting portion (14424), at least a part of the upper right connecting portion (14426) being located forward of the crankcase (182) as viewed from the side of the vehicle, the upper right connecting portion (14426) being connected to the crankcase (182).

9. The straddled vehicle according to any one of claims 1 to 8, wherein the lower down frame portion (1442) further includes a bracket (14421), top ends of the lower left down frame portion (14422) and lower right down frame portion (14423) being connected to the bracket (14421), the bracket (14421) being detachably attached to the upper down frame portion (1441).

## Patentansprüche

1. Ein gespreiztes Fahrzeug, umfassend:
einen Fahrzeugkörperrahmen (14);
einen Motor (18), der an dem Fahrzeugkörperrahmen (14) angebracht ist; und
ein Abgasrohr (24), das mit dem Motor (18) verbunden ist,
wobei der Fahrzeugkörperrahmen (14) ein Diamantrahmen ist, in dem kein Fahrzeugkörperrahmenabschnitt unter dem Motor (18) existiert, und beinhaltet:
ein Kopfrohr (141); und
einen Abwärtsrahmenabschnitt (144), der mit dem Kopfrohr (141) verbunden ist,
wobei der Abwärtsrahmenabschnitt (144) beinhaltet:
einen oberen Abwärtsrahmenabschnitt (1441), der ein Element ist, das mit dem Kopfrohr (141) verbunden ist und sich nach hinten und abwärts von dem Kopfrohr (141) erstreckt, zumindest ein Teil des oberen Abwärtsrahmenabschnitts (1441) überlappt den Motor (18), von der Vorderseite des Fahrzeugs gesehen, der obere Abwärtsrahmenabschnitt (1441) ist vor dem Motor (18) gelegen, von einer Seite des Fahrzeugs gesehen; und
einen unteren Abwärtsrahmenabschnitt (1442), der sich von dem oberen Abwärtsrahmenabschnitt (1441) erstreckt,
wobei der untere Abwärtsrahmenabschnitt (1442) beinhaltet:
einen unteren linken Abwärtsrahmenabschnitt (14422), der direkt oder indirekt mit einem unteren Ende des oberen Abwärtsrahmenabschnitts (1441) verbunden ist und zu der Linken einer Mittelachse (1441L) des oberen Abwärtsrahmenabschnitts (1441), entlang einer linksrechts-Richtung des Fahrzeugs bestimmt, gelegen ist, zumindest ein Teil des unteren linken Abwärtsrahmenabschnitts (14422) überlappt den Motor (18), von der Vorderseite des Fahrzeugs gesehen, zumindest ein Teil des unteren linken Abwärtsrahmenabschnitts (14422) ist vor dem Motor (18) gelegen, von der Seite des Fahrzeugs gesehen, der untere linke Abwärtsrahmenabschnitt (14422) erstreckt sich von dem oberen Abwärtsrahmenabschnitt (1441) nach hinten und abwärts, ein unteres Ende des unteren linken Abwärtsrahmenabschnitts (14422) ist an dem Motor (18) angebracht; und
einen unteren rechten Abwärtsrahmenabschnitt (14423), der direkt oder indirekt mit dem unteren Ende des oberen Abwärtsrahmenabschnitts (1441) verbunden ist und zu der Rechten der Mittelachse (1441L) des oberen Abwärtsrahmenabschnitts (1441), entlang der linksrechts-Richtung des Fahrzeugs bestimmt, gelegen ist, zumindest ein Teil des unteren rechten Abwärtsrahmenabschnitts (14423) überlappt den Motor (18), von der Vorderseite des Fahrzeugs gesehen, zumindest ein Teil des unteren rechten Abwärtsrahmenabschnitts (14423) ist vor dem Motor (18) gelegen, von der Seite des Fahrzeugs gesehen, der untere rechte Abwärtsrahmenabschnitt (14423) erstreckt sich von dem oberen Abwärtsrahmenabschnitt (1441) nach hinten und abwärts, ein unteres Ende des unteren rechten Abwärtsrahmenabschnitts (14423) ist an dem Motor (18) angebracht,
wobei zumindest ein Abschnitt des Abgasrohrs (24), der mit dem Motor (18) verbunden ist, zu der Rechten des unteren linken Abwärtsrahmenabschnitts (14422) und zu der Linken des unteren rechten Abwärtsrahmenabschnitts (14423) gelegen ist.

2. Das gespreizte Fahrzeug nach Anspruch 1, wobei der Abschnitt des Abgasrohrs (24), der mit dem Motor (18) verbunden ist, die Mittelachse (1441L) des oberen Abwärtsrahmenabschnitts (1441), von der Vorderseite des Fahrzeugs gesehen, überlappt.

3. Das gespreizte Fahrzeug nach Anspruch 1 oder 2, wobei Enden des unteren linken Abwärtsrahmenabschnitts (14422) und des unteren rechten Abwärtsrahmenabschnitts (14423), die mit dem oberen Abwärtsrahmenabschnitt (1441) verbunden sind, höher als der Abschnitt des Abgasrohrs (24) gelegen sind, der mit dem Motor (18) verbunden ist.

4. Das gespreizte Fahrzeug nach irgendeinem der Ansprüche 1 bis 3, wobei der Motor (18) einen Zylinderkopf (1811) beinhaltet, wobei das Abgasrohr (24) mit dem Zylinderkopf (1811) verbunden ist, und
wobei ein unterster Punkt des oberen Abwärtsrahmenabschnitts (1441) den Zylinderkopf (1811), von der Vorderseite des Fahrzeugs gesehen, überlappt.

5. Das gespreizte Fahrzeug nach Anspruch 4, wobei Enden des unteren linken Abwärtsrahmenabschnitts (14422) und des unteren rechten Abwärtsrahmenabschnitts (14423), die mit dem oberen Abwärtsrahmenabschnitt (1441) verbunden sind, niedriger als ein oberster Punkt des Zylinderkopfs (1811) gelegen sind.

6. Das gespreizte Fahrzeug nach irgendeinem der Ansprüche 1 bis 5, wobei der Motor (18) ein Kurbelgehäuse (182) beinhaltet, und
wobei der untere Abwärtsrahmenabschnitt (1442) beinhaltet:
einen unteren linken Verbindungsabschnitt (14424), der an einem unteren Ende des unteren linken Abwärtsrahmenabschnitts (14422) vorgesehen ist und mit dem Kurbelgehäuse (182) verbunden ist; und
einen unteren rechten Verbindungsabschnitt (14424), der an einem unteren Ende des unteren rechten Abwärtsrahmenabschnitts (14423) vorgesehen ist und mit dem Kurbelgehäuse (182) verbunden ist.

7. Das gespreizte Fahrzeug nach Anspruch 6, wobei zumindest ein Teil von jedem von dem unteren linken Verbindungsabschnitt (14424) und dem unteren rechten Verbindungsabschnitt (14424) vor dem Kurbelgehäuse (182), von der Seite des Fahrzeugs gesehen, gelegen ist und höher als ein unterster Punkt des Kurbelgehäuses (182) gelegen ist.

8. Das gespreizte Fahrzeug nach Anspruch 6 oder 7, wobei der untere Abwärtsrahmenabschnitt (1442) weiterhin beinhaltet:
einen oberen linken Verbindungsabschnitt (14425), der an dem unteren linken Abwärtsrahmenabschnitt (14422) vorgesehen ist und höher als der untere linke Verbindungsabschnitt (14424) gelegen ist, zumindest ein Teil des oberen linken Verbindungsabschnitts (14425) ist vor dem Kurbelgehäuse (182), von der Seite des Fahrzeugs gesehen, gelegen, der obere linke Verbindungsabschnitt (14425) ist mit dem Kurbelgehäuse (182) verbunden; und
einen oberen rechten Verbindungsabschnitt (14426), der an dem unteren rechten Abwärtsrahmenabschnitt (14423) vorgesehen ist und höher als der untere rechte Verbindungsabschnitt (14424) gelegen ist, zumindest ein Teil des oberen rechten Verbindungsabschnitts (14426) ist vor dem Kurbelgehäuse (182), von der Seite des Fahrzeugs gesehen, gelegen, der obere rechte Verbindungsabschnitt (14426) ist mit dem Kurbelgehäuse (182) verbunden.

9. Das gespreizte Fahrzeug nach irgendeinem der Ansprüche 1 bis 8, wobei der untere Abwärtsrahmenabschnitt (1442) weiterhin eine Klammer (14421) beinhaltet, obere Enden des unteren linken Abwärtsrahmenabschnitts (14422) und unteren rechten Abwärtsrahmenabschnitts (14423) sind mit der Klammer (14421) verbunden, die Klammer (14421) ist abnehmbar an dem oberen Abwärtsrahmenabschnitt (1441) angebracht.

## Revendications

1. Véhicule à selle comprenant :
un cadre de véhicule (14),
un moteur (18) fixé au cadre de véhicule (14), et
un tuyau d'échappement (24) raccordé au moteur (18),
dans lequel le cadre de véhicule (14) est un cadre triangulaire dans lequel aucune partie du cadre de véhicule n'est présente en dessous du moteur (18), et il inclut :
un tube de fourche (141), et
une partie de cadre bas (144) raccordée au tube de fourche (141),
dans lequel la partie de cadre bas (144) inclut :
une partie supérieure de cadre bas (1441) qui est un élément raccordé au tube de fourche (141) et s'étendant vers l'arrière et vers le bas à partir du tube de fourche (141), au moins un composant de la partie supérieure de cadre bas (1441) chevauchant le moteur (18) comme peut le voir depuis l'avant du véhicule, la partie supérieure de cadre bas (1441) étant située à l'avant du moteur (18) comme on peut le voir depuis un flanc du véhicule, et
une partie inférieure de cadre bas (1442) s'étendant depuis la partie supérieure de cadre bas (1441), la partie inférieure de cadre bas (1442) incluant :
une partie gauche inférieure de cadre bas (14422) qui est directement ou indirectement raccordée à l'extrémité inférieure de la partie supérieure de cadre bas (1441) et située à la gauche de l'axe central (1441L) de la partie supérieure de cadre bas (1441) comme on peut le déterminer le long de la direction gauche droite du véhicule, au moins un composant de la partie gauche inférieure de cadre bas (14422) chevauchant le moteur (18) comme on peut le voir depuis l'avant du véhicule, au moins un composant de la partie gauche inférieure de cadre bas (14422) étant situé à l'avant du moteur (18) comme on peut le voir depuis le flanc du véhicule, la partie gauche inférieure de cadre bas (14422) s'étendant depuis la partie supérieure de cadre bas (1441) vers l'arrière et vers le bas, une extrémité inférieure de la partie gauche inférieure de cadre bas (14422) étant fixée au moteur (18), et
une partie droite inférieure de cadre bas (14423) qui est directement ou indirectement raccordée à l'extrémité inférieure de la partie supérieure de cadre bas (1441) et située à la droite de l'axe central (1441L) de la partie supérieure de cadre bas (1441) comme on peut le déterminer le long de la direction gauche droite du véhicule, au moins un composant de la partie droite inférieure de cadre bas (14423) chevauchant le moteur (18) comme on peut le voir depuis l'avant du véhicule, au moins un composant de la partie droite inférieure de cadre bas (14423) étant situé à l'avant du moteur (18) comme on peut le voir depuis le flanc du véhicule, la partie droite inférieure de cadre bas (14423) s'étendant depuis la partie supérieure de cadre bas (1441) vers l'arrière et vers le bas, une extrémité inférieure de la partie droite inférieure de cadre bas (14423) étant fixée au moteur (18),
dans lequel moins une partie du tuyau d'échappement (24), raccordée au moteur (18), est située à la droite de la partie gauche inférieure de cadre bas (14422) et à la gauche de la partie droite inférieure de cadre bas (14423).

2. Véhicule à selle selon la revendication 1, dans lequel la partie du tuyau d'échappement (24) raccordée au moteur (18) chevauche l'axe central (1441L) de la partie supérieure de cadre bas (1441) comme on peut le voir depuis l'avant du véhicule.

3. Véhicule à selle selon la revendication 1 ou la revendication 2, dans lequel des extrémités de la partie gauche inférieure de cadre bas (14422) et de la partie droite inférieure de cadre bas (14423) qui sont reliées à la partie supérieure de cadre bas (1441) sont situées plus haut que la partie du tuyau d'échappement (24) raccordée au moteur (18).

4. Véhicule à selle selon l'une quelconque des revendications 1 à 3, dans lequel le moteur (18) inclut une culasse (1811), le tuyau d'échappement (24) étant raccordé à la culasse (1811), et
dans lequel le point le plus bas de la partie supérieure de cadre bas (1441) chevauche la culasse (1811) comme on peut le voir depuis l'avant du véhicule.

5. Véhicule à selle selon la revendication 4, dans lequel des extrémités de la partie gauche inférieure de cadre bas (14422) et de la partie droite inférieure de cadre bas (14423) qui sont raccordées à la partie supérieure de cadre bas (1441) sont situées plus bas que le point le plus haut de la culasse (1811).

6. Véhicule à selle selon l'une quelconque des revendications 1 à 5, dans lequel le moteur (18) inclut un vilebrequin (182), et
dans lequel la partie inférieure de cadre bas (1442) inclut :
une partie gauche inférieure de raccordement (14424) prévue sur l'extrémité inférieure de la partie gauche inférieure de cadre bas (14422) et raccordée au vilebrequin (182), et
une partie droite inférieure de raccordement (14424) prévue sur l'extrémité inférieure de la partie droite inférieure de cadre bas (14423) et raccordée au vilebrequin (182) .

7. Véhicule à selle selon la revendication 6, dans lequel au moins un composant de chacune de la partie gauche inférieure de raccordement (14424) et de la partie droite inférieure de raccordement (14424) est situé à l'avant du vilebrequin (182) comme on peut le voir depuis le flanc du véhicule, et il est situé plus haut que le point le plus bas du vilebrequin (182).

8. Véhicule à selle selon la revendication 6 ou la revendication 7, dans lequel la partie inférieure de cadre bas (1442) inclut en outre :
une partie gauche supérieure de raccordement (14425) prévue sur la partie gauche inférieure de cadre bas (14422) et située plus haut que la partie gauche inférieure de raccordement (14424), au moins un composant de la partie gauche supérieure de raccordement (14425) étant situé à l'avant du vilebrequin (182) comme on peut le voir depuis le flanc du véhicule, la partie gauche supérieure de raccordement (14425) étant raccordée au vilebrequin (182), et
une partie droite supérieure de raccordement (14426) prévue sur la partie droite inférieure de cadre bas (14423) et située plus haut que la partie droite inférieure de raccordement (14424), au moins un composant de la partie droite supérieure de raccordement (14426) étant situé à l'avant du vilebrequin (182) comme on peut le voir depuis le flanc du véhicule, la partie droite supérieure de raccordement (14426) étant raccordée au vilebrequin (182) .

9. Véhicule à selle selon l'une quelconque des revendications 1 à 8, dans lequel la partie inférieure de cadre bas (1442) inclut en outre un support (14421), des extrémités supérieures de la partie gauche inférieure de cadre bas (14422) et de la partie droite inférieure de cadre bas (14423) étant raccordées au support (14421), le support (14421) étant fixé tout en étant amovible à la partie supérieure de cadre bas (1441).
